(19) Europäisches Patentamt

European Patent Office

Office européen des brevets

(11) EP 4 722 972 A1

(12) EUROPEAN PATENT APPLICATION

(43) Date of publication:
08.04.2026 Bulletin 2026/15

(21) Application number: 24203992.3

(22) Date of filing: 01.10.2024

(51) International Patent Classification (IPC):
G06F 40/30 (2020.01)    G06F 40/56 (2020.01)
G06F 40/284 (2020.01)

(52) Cooperative Patent Classification (CPC):
G06F 40/56; G06F 40/284; G06F 40/30

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Aleph Alpha GmbH
69115 Heidelberg (DE)

(72) Inventors:
• BALLES, Lukas
  69123 Heidelberg (DE)
• NEITEMEIER, Pit
  69123 Heidelberg (DE)

(74) Representative: Bardehle Pagenberg
Partnerschaft mbB
Patentanwälte Rechtsanwälte
Prinzregentenplatz 7
81675 München (DE)

(54) **METHOD, DEVICE AND COMPUTER PROGRAM FOR TRAINING A MACHINE LEARNING MODEL TO GENERATE TEXT AND FOR GENERATING TEXT USING THE TRAINED MACHINE LEARNING MODEL**

(57) The disclosure generally relates to a computer-implemented method for training a machine learning model for text generation, the method comprising inputting text into the machine learning model; preprocessing the input text to obtain a plurality of character vector representations; encoding, using an encoder, each of the plurality of character vector representations to obtain a plurality of word vector representations; generating, using a backbone model, a plurality of predictive word vector representations based on the plurality of word vector representations; decoding, using a decoder, the plurality of predictive word vector representations to obtain a plurality of character-probabilities; and updating the machine learning model based the plurality of character-probabilities. The disclosure also relates to a computer implemented method for generating text, a corresponding device, system and computer program.

Figure 1

## Description

## Technical field

The present disclosure relates to a computer-implemented method for training a machine learning model to generate text and to a computer-implemented method for generating text using the trained machine learning model as well as to a corresponding computer program, device and system.

## Technical background

In the context of natural language processing, tokenization describes the process of splitting text into smaller pieces (i.e., tokens). The tokens serve as the basis for further processing steps such as embedding. Accordingly, tokenization divides text into meaningful components that are further processed. The resulting token can vary in granularity. Two fundamental tokenization approached are character-level tokenization and word-level tokenization.

During character-level tokenization, the text is split into individual characters rather than other words or sentences. Subsequently, each individual character is treated as a separate token. The input text "*Hello*" would thus result in a total of six token *"h", "e", "l", "l"* and *"o"*. An advantage of character-level tokenization is the size of the vocabulary. Since each character is a token, the total size of the vocabulary is limited to the number of characters. This type of tokenization is also able to handle previously unseen words, since it is not focused on the word but on the character-level. However, character-level tokenization results in very long sequences which increases the computational complexity of the training process and of the inference process. For example, the word *"nature"* would result in a sequence of six different token instead of just one token as would be the case in word-character tokenization. Since the computational complexity of machine learning models handling natural language is based on the length of the sequence, character-level tokenization increases the computational cost. Finally, character-level tokenization also makes it difficult to capture long range dependencies, such as a word relating to a word in another sentence.

In contrast, during word-level tokenization, the text is split into words rather than individual characters or entire sentences. Each word is then treated as an individual token. The sentence *"Hello world"* would for example result in the token *"Hello"* and *"world"*. In contrast to character-level tokenization, word-level tokenization is better at preserving semantic meaning. Word-level tokenization also produces smaller sequences and is usually computationally more efficient than character-level tokenization. However, word-level tokenization suffers in performance when words are misspelled. Moreover, words that are not present during training are treated as unknown when using word-level tokenization. Accordingly, the trained model is extremely sensitive to the corpus that is used for training. Word-level tokenization also struggles to accurately process morphologies of a word such as *"run", "running"* and *"ran"*. Since these morphologies are different words, they receive a different token. However, they are likely to convey a similar meaning.

Sub-word tokenizers aim at combining both character-level and word-level tokenization by splitting the text into smaller units that are larger than characters and smaller than words. Each sub-word is then treated as a token. The sentence *"Hello world"* may, for example, result in the token *"Hel", "lo"* and *"world"*. The sub-word approach aims at balancing the efficiency of the word-level approach with the flexibility of the character-level approach. However, sub-word tokenization still suffers from several drawbacks including lack of adaptability to new domains or language, sensitivity to typos and spelling variations and a large vocabulary in comparison to character-level approaches.

In view of these disadvantages, the presently known tokenization approaches may not always lead to the desired results. Against this background, an object of the present disclosure is to address one or more or all of the above-mentioned disadvantages.

## Summary of the invention

The above-mentioned objects and other objects, which become apparent from the following description, are solved by the subject-matter of the independent claims. Preferred embodiments are subject of the dependent claims.

A 1st embodiment of the disclosure is directed to a computer-implemented method for training a machine learning model for text generation, the method comprising: inputting text into the machine learning model; preprocessing the input text to obtain a plurality of character vector representations; encoding, using an encoder, each of the plurality of character vector representations to obtain a plurality of word vector representations; generating, using a backbone model, a plurality of predictive word vector representations based on the plurality of word vector representations; decoding, using a decoder, the plurality of predictive word vector representations to obtain a plurality of character-probabilities; and updating the machine learning model based the plurality of character-probabilities.

Preprocessing the input text to obtain a plurality of character vector representations may have the advantage of preparing the input text for further processing during the subsequent steps. Since the input text is preprocessed to obtain vector representations on a character-level, the size of the resulting vocabulary may be limited to the number of possible characters. A smaller vocabulary size may require less memory and may thus save computational resources. An initial processing on a character-level may also provide a higher degree of flexibility.

Encoding, using an encoder, each of the plurality of character vector representations to obtain a plurality of word vector representations may have the advantage of converting the character-level input into a word-level output. In other words, the input to the encoder is based on vector representations on a character-level (i.e., one vector per character) and the output of the decoder is based on vector representations on a word-level (i.e., one vector per word). The conversion from character-level to word-level may save computational resources during further processing of the input text.

Generating, using a backbone model, a plurality of predictive word vector representations based on the plurality of word vector representations may have the advantage of performing the most computationally expensive part of the model on word-level representation of the input text. More specifically, in word-level representation, a single word vector represents an entire word. In contrast, in character-level representation, a single word requires x character vectors, wherein x is the number of characters that the word is made up of. For example, using word-level representation, the word *"nature"* requires one word vector but six character-vectors, one vector for each character in the word. Accordingly, performing the backbone calculations on a word-level may have the advantage of being computationally less complex and may thus save computational resources.

Decoding, using a decoder, the plurality of predictive word vector representations to obtain a plurality of character-probabilities may enable final processing on a character level. This may have the advantages of providing a more flexible output and may thus increase the performance of the model regarding quality of the output. Updating the machine learning model based the plurality of character-probabilities may have the advantage of improving the model based on the processed text.

Finally, performing the input (i.e., the initial preprocessing of the input text) and the output (i.e., the final processing of the output text) on a character-level, while performing the backbone calculation (i.e., the computationally expensive part of the model) on a word-level may combine the advantages of character-level and word-level approaches. More specifically, the combined approach may benefit from the flexibility of the character-level approach and the reduced requirements regarding computation resources of the word-level approach.

According to a 2nd embodiment, iteratively repeating the steps of inputting, preprocessing, encoding, generating, decoding, and updating.

Iteratively repeating the steps of inputting, preprocessing, encoding, generating, decoding, and updating may have the advantage of gradually improving the performance of the machine learning model. This iterative approach further as the advantage of enabling the machine learning model to be trained on large training datasets. More specifically, a large dataset may reach a size where the entire training dataset cannot fit into memory. The iterative approach may be used to iteratively load parts of the training dataset into memory and train the model on the loaded part of the training dataset. A further advantage of the iterative approach may be that data that becomes available after initially training the machine learning model may still be incorporated by performing additional training iterations. An iterative approach may also enable performance monitoring. For example, the performance of the model may be tested after a predefined number of iterations. If the model does not perform as desired, adjustments to the model may be performed before further training.

According to a 3rd embodiment, preprocessing comprising splitting the input text into a plurality of character sequences, wherein each character sequence represents a word; and embedding each character in the plurality of character sequences to obtain the plurality of character vector representations.

Splitting the input text into a plurality of character sequences, wherein each character sequence represents a word may have the advantage of preprocessing the input text on a character-level. Embedding each character in the plurality of character sequences to obtain the plurality of character vector representations may have the advantage of obtaining a vector representation for each character of the input text.

According to a 4th embodiment, preprocessing comprising, prior to embedding, prepending a special character to each character sequence.

Prior to embedding, prepending a special character to each character sequence may have the advantage of introducing a special character which may later be used to represent the character sequence that it is prepended to. Prepending the special character prior to embedding may enable accurate incorporation of the special character into the training process.

According to a 5th embodiment, the encoder is a natural language processing model, wherein preferably the architecture of the first natural language processing model is based on a transformer model of the decoder-only variant, most preferably wherein the attention mechanism of the transformer model is bidirectional.

The encoder being a first natural language processing machine learning model may provide the ability of processing sequences as an input and return sequences as an output. The architecture of the first natural language processing model being preferably based a transformer model of the decoder-only variant may have the advantage of leveraging the performance advantages of the respective architecture. The attention mechanism of the transformer model preferably being bidirectional may improve the model's ability to understand the context of the input text. More specifically, a bidirectional attention mechanism considers preceding and succeeding words simultaneously which improves context awareness.

According to a 6th embodiment, the backbone model is a second natural language processing model, wherein preferably the architecture of the second natural language processing model is based on a transformer model of the decoder-only variant, most preferably wherein the attention mechanism of the transformer model is causal.

The backbone model being a second natural language processing machine learning model, wherein preferably the architecture of the natural language processing model being based on a transformer model of the decoder-only variant may have the same advantages as mentioned with regards to embodiment 5. The attention mechanism of the transformer model being causal may enable the model to autoregressively generate text. In other words, the causal attention mechanism may enables the backbone model to generate an output in which each output is based on the previously generated output.

According to a 7th embodiment, comprising, prior to the decoding step, concatenating each of the plurality of predictive word vector representations with the corresponding character vector representations.

Prior to the decoding step, concatenating each of the plurality of predictive word vector representations with the corresponding character vector representations may have the advantage of improving the information that the decoding step is based on. This may particularly be the case since the predictive word vector representation represents the word that is predicted to be the next word by the backbone model and the corresponding character vector representations represent the actual next word. The combination of word-level representation (i.e., word vector of the predicted next word) and character-level representation (i.e., character vectors of the actual next word) may further improve the information that the decoding step is based on.

According to an 8th embodiment, the decoder is a third natural language processing model, wherein preferably the architecture of the third natural language processing model is based on a transformer model of the decoder-only variant, most preferably wherein the attention mechanism of the transformer model is causal

The backbone model being a third natural language processing model, wherein preferably the architecture of the third natural language processing model being based on a transformer model of the decoder-variant may have the same advantages as mentioned with regards to embodiment 5. The attention mechanism of the transformer model preferable being causal may have the same advantages as discussed in embodiment 6.

According to a 9th embodiment, updating the machine learning model comprises updating one or more of the adjustable parameters of one or more of: an embedding matrix that is used during the preprocessing step, the encoder, the backbone model and/or the decoder.

Updating one or more of the adjustable parameters of one or more of an embedding matrix that is used during the preprocessing step, the encoder, the backbone model and/or the decoder enables training of the machine learning model. This may have the advantage of improving the performance of the machine learning model. It may further provide the flexibility of training some components of the machine learning model while keeping other components of the machine learning model fixed.

A 10th embodiment of the disclosure is directed to a computer-implemented method for generating text using the machine learning model trained according to any one of the preceding embodiments, the method comprising inputting text into the trained machine learning model; generating text based on the input text using the trained machine learning model.

A computer-implemented method for generating text using the machine learning model trained according to any one of the preceding embodiments may have the advantage of reducing computational complexity while maintaining the performance of the machine learning model. As mentioned with regards to previous embodiments, the architecture of the trained machine learning model may provide the computational efficiency of word-level processing while maintaining the flexibility of character-level processing.

According to an 11th embodiment, generating text comprises generating a character based on the plurality of character probabilities; and updating the input of the decoder based on the generated character or updating the input of the backbone model based on the one or more generated characters; and iteratively repeating the generating and the updating.

Generating a character based on the plurality of character probabilities may enable text generation on a character-level. In other words, the machine learning model may not predict the entire next word but may rather predict each character of the next word individually. This may improve the result of the prediction. Character-level prediction may also have the advantage of making the prediction more flexible. Updating the input of the decoder based on the generated character or updating the input of the backbone model based on the one or more generated characters may have the advantage of taking the generated character into account during the generation of subsequent characters. Iteratively repeating the generating and the updating may further improve the generated text.

According to a 12th embodiment, updating the input of the decoder comprising determining that the generated character is not a special character; and updating the input to the decoder based on the character vector representation of the generated character; and decoding the updated input to obtain a plurality of character probabilities.

Updating the input of the decoder comprising determining that the generated character is not a special character may enable to switch between character-level prediction and word-level prediction. The determination that the generated character is not a special character may signal the prediction of a next character. Updating the input to the decoder based on the character vector representation of the generated character may provide the advantage of taking the generated character into account when generating the next character. This may improve the result of the prediction. decoding the updated input to obtain a plurality of character probabilities may provide flexibility during text generation by predicting the next word on an individual character basis instead of a word-level.

According to a 13th embodiment, updating the input of the backbone model comprising determining that the generated character is a special character; prepending the special character to one or more generated characters to obtain a prediction character sequence; embedding each character of the prediction character sequence to obtain a plurality of prediction character vector representations; encoding, using the encoder, the prediction character vector representations to obtain a prediction word vector representation; updating the input to the backbone model based on the prediction word vector representation; generating a predictive word vector representation based on the updated input; decoding the predictive word vector representation to obtain a plurality of character probabilities.

Updating the input of the backbone model comprising determining that the generated character is a special character may provide the advantage of combining character-level prediction with word-level prediction. In other words, determining that the generated character is a special character may trigger word-level prediction. The word vector of the generated word (i.e., one or more generated characters) and the character vectors of the generated word may then be used to update the input to the backbone model. Accordingly, the flexibility of the character-level prediction is combined with the efficiency of the word-level prediction that is performed by the backbone model. Prepending the special character to one or more generated characters to obtain a prediction character sequence embedding each character of the prediction character sequence to obtain a plurality of prediction character vector representations and encoding, using the encoder, the prediction character vector representations to obtain a prediction word vector representation may have the advantage of preprocessing and encoding the one or more generated characters. This may improve subsequent processing, particularly the prediction performed by the backbone model. Updating the input to the backbone model with the prediction word vector representation may have the same advantages as mentioned above with regards to leveraging the efficiency of word-level prediction. In other words, performing the backbone calculations on a word-level representation may be less computationally complex and may thus save computational resources.

Generating a predictive word vector representation based on the updated input may have the advantage using the efficiency of the backbone model to predict the next word. As previously discussed, processing on a word-level may be more efficiency which is among others due to the shorter sequence length in which the input is represented. Decoding the predictive word vector representation to obtain a plurality of character probabilities may provide flexibility during text generation by predicting the next word on an individual character basis instead of a word-level.

A 14th embodiment of the disclosure is directed to device or system comprising means for carrying out the method according to any one of embodiments 1 to 13.

A device or system comprising means for carrying out the method according to any one of embodiments 1 to 13 may have all the advantages mentioned in regards to the corresponding embodiments.

A 15th embodiment of the disclosure is directed to a computer program comprising instructions which, when the program is executed by a computer, cause the computer to carry out the method of any one of embodiments 1 to 13.

A computer program comprising instructions which, when the program is executed by a computer, cause the computer to carry out the method of any one of embodiments 1 to 13 may have all the advantages mentioned in regards to the corresponding embodiments.

**Brief description of the figures**

Various aspects of the present invention are described in more detail in the following by reference to the accompanying figures without the present invention being limited to the embodiments of these figures.

Fig. 1     illustrates an exemplary training process according to an embodiment of the present disclosure;

Fig. 2     illustrates an exemplary inference process according to an embodiment of the present disclosure;

Fig. 3     illustrates an exemplary inference process according to an embodiment of the present disclosure;

Fig. 4     further illustrates a flow diagram depicting a computer-implemented method for training a machine learning model for text generation according to an embodiment of the present disclosure; and

Fig. 5     shows an example computing device that may be used in some embodiments to implement features described herein.

**Detailed description of preferred embodiments**

In the following, the invention is described with reference to the accompanying figures in more detail.

However, the present invention can also be used in other embodiments not explicitly disclosed hereafter. As detailed below, the embodiments are compatible with each other, and individual features of one embodiment may also be applied to another embodiment. The figures do not limit the scope of the claims but merely support the understanding of the invention.

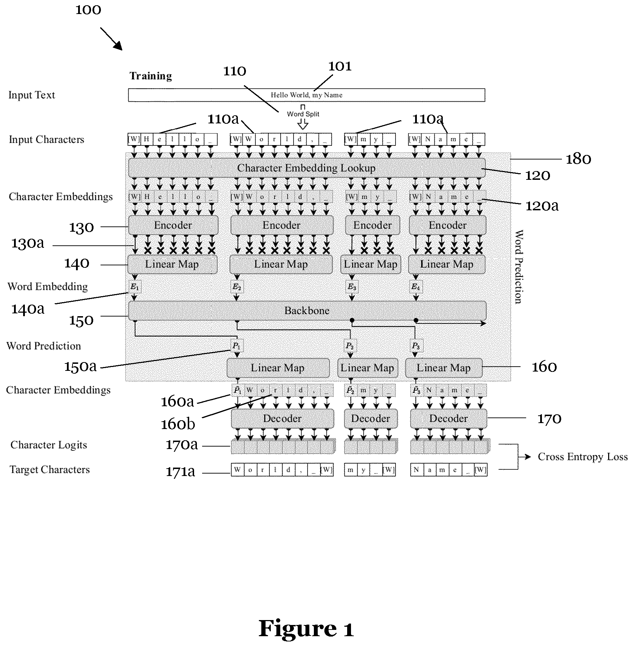

**Figure 1** illustrates an exemplary training process 100 of a machine learning model according to an embodiment of the disclosure.

The training process 100 may generally be categorized in three phases, an encoding phase, a backbone phase, and a decoding phase. As illustrated in Figure 1, the encoding phase and the decoding phase process the input text 101 on a byte level (i.e., character level). In contrast, the backbone phase processes the input text on a word level. The core of each phase may comprise a natural language processing machine learning model that processes the input text.

The training process 100 may be based on one or more corpora of text. For illustration purposes, Figure 1 focuses on the processing on one piece of text (i.e., *"Hello World, my Name"*) that could have occurred in a text corpus. *"Hello World, my Name"* is regarded as an input text 101. In a preprocessing step, the input text may be split into words. The word splitting 110 may be performed using a fixed splitting rule. More specifically, the text may be split at whitespaces. Additionally, the whitespaces may be added to the previous words. Note that a special token, indicated here as [W] may be prepended to each word. The special token may indicate the beginning of each word. For the input text 101 such word splitting and prepending may result in the character sequences 110a *"[W]Hello_", "[W]World,_", "[W]my_"* and *"[W]Name_"*. The input text may be referred to as $T = (b_1, ..., b_n)$

wherein $b_i \in \mathbb{B} = \{0, ..., 255\}$. In other words, the input text T may comprise one or more characters $b_i$ that are represented in a binary format. The splitting of the input text into a sequence of words S may further be represented as $S = (w_1, ..., w_n) = (([W], b_1, ..., b_{k(T)}), ..., ([W], b_{l(T)}, ... b_n))$ wherein $w_i \in \mathbb{B}^N$. In this representation, the special token is already prepended to each word of the sequence of words 110a.

The resulting sequence of characters 110a serve as an input to the embedding step 120 in which each character of each sequence is transformed into a vector 120a. The embedding step 120 may be implemented using an embedding matrix. An embedding matrix may be a matrix in which each row corresponds to a vector representation (i.e., embedding 120a) of a token (e.g., a character) of a vocabulary. During the embedding step 120, the embedding matrix may be used to look up the vector representation 120a of each character and replace each character with its corresponding vector representation 120a.

The subsequent encoding step 130 uses a natural language processing model to encode each vector representation 120a. The architecture of the natural language processing model may be based on a transformer model of a decoder-only variant. The attention mechanism of the transformer model of a decoder-only variant may be bidirectional. As illustrated in Figure 1, the encoding step 130 may return an encoded vector representation for each character 130a. However, only one encoded vector representation per word may be used for further processing and the other encoded vector representations are discarded. In this manner, the machine learning model may learn to represent one word in one vector (i.e., the vector that is not discarded but further processed).

Since the discarding may change the dimensionality of the information, a linear mapping step 140 may be required to consolidate the remaining encoded word vector representations. The result of the encoding phase may be a dense representation of the input text in form of one encoded vector representation for each word 140a. As illustrated in Figure 1, $E_1$ may be the encoded vector representation of the word *"[W]Hello_"*, $E_2$ may be the encoded vector representation of the word *"[W] World_"*, $E_3$ may be the encoded vector representation of the word *"[W]my_"* and $E_4$ may be the encoded vector representation of the word *"[W]Name_"*. Accordingly, the encoding phase may be used to convert the character-level input into a word-level output.

This word-level input text may serve as the input text for the subsequent backbone phase. The backbone phase may comprise a natural language processing model 150 that uses the word vector representations (i.e., $E_1$, $E_2$, $E_3$, $E_4$) 140a to predict the respective subsequent word vector representations (i.e., $P_1$, $P_2$, $P_3$) 150a. The architecture of the natural language machine learning model may be based on a transformer model of the decoder-only variant. The attention mechanism of the transformer model of a decoder-only variant may be causal. A model comprising acausal attention mechanism may describes a model that generates predictions based on previous information. For example, when given the string *"Hello World, my Name"* and predicting the word *"World"*, a causal model only takes into account the word *"Hello"*. If the model was not causal, it may also take into account the words "my" and *"Name"* for the prediction of the word *"World"*.

The decoding phase may commence with a further linear transformation 160. The linear transformation may again serve the purpose of adjusting the dimensionality of the input information. More specifically, before entering the decoder 170, the input information is adjusted by concatenating the word vector representation (i.e., word-level representation) of the predicted next word 140a with the sequence of character vector representations (i.e., character-level representation) of the actual next word 160b. For example, the character vector representations 160b *"W", "o", "r", "l", "d", ",", "_"* are concatenated to the predicted word vector representa-

tion 160a $P_1$, the character vector representations "$m$", "$y$" and "_" are concatenated to the predicted word vector representation $P_2$ and so on. Note that the characters of the actual next 160b word may be embedded using an embedding matrix that is different from the embedding matrix that may have been used for initial embedding step 120.

The character-level input information may serve as an input to the decoder 170. The decoder 170 may be a natural language processing model. The architecture of the natural language processing machine learning model may be based on a transformer model of the decoder-only variant. The attention mechanism of the transformer model of a decoder-only variant may be causal. Based on the character-level input information, the decoder 170 may return a plurality of character probability vectors 170a, wherein each position in a character probability vector may describe the likelihood of a specific character of being the next character in the text. Note that character logits, as mentioned in Figure 1, are a processed form of character probabilities 170a which may improve further processing.

Finally, a cross entropy loss function may be used to compare the prediction of the machine learning model with the actual values 171a. The trainable parameters of the machine learning model may be updated according to the result of the comparison. This may include updating the parameters of the embedding matrix in the encoding step 120, the embedding matrix in the decoding step, the parameters of the encoder 130, the parameters of the backbone model 150 and/or the parameters of the decoder 170. The above-mentioned steps may be iteratively repeated.

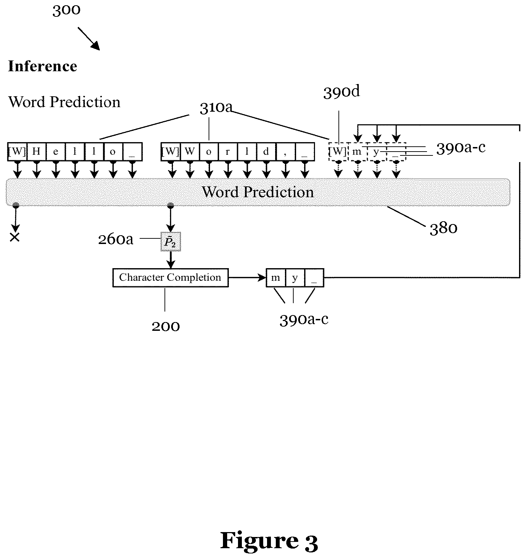

Note that during the inference process, word-level prediction 180, which is described in more detail with regards to Figure 3 may comprise the embedding step 120, the encoding step 130, the linear mapping 140, the backbone step 150 and/or the further linear mapping 160. Word-level prediction 180 may result in the generation of predictive word vector representation 160a (i.e., $P_2$).

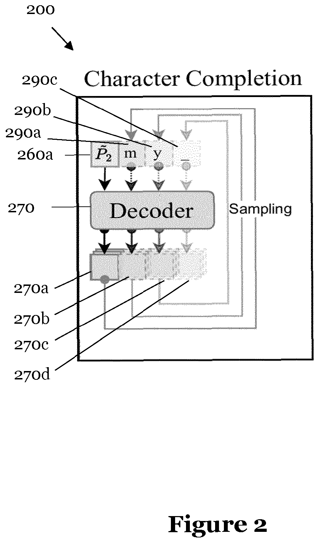

Figure 2 illustrates the inference process on a character level 200 which may also be referred to as character completion.

During inference, the trained machine learning model may be used to generate text based on a piece of input text. The provided input text is processed by the trained machine learning model. The processing of the provided input text may be identical to that described with regards to Figure 1 with the difference that the output may not be used to train the model but to iteratively generate text. Figure 2 illustrates the iterative generation of characters which may also be referred to as character completion 200. The trained decoder 270 may take the prediction word vector representation 260a as an input and may generate a vector of character probabilities 270a. As described above, each position in the vector of character probabilities represents the probability of a specific character to be the next character. Such a vector of character probabilities 270a may be illustrated as ["$a$" = 0.6, "$b$" = 0.3, ..., "$z$" = 0.1], wherein the character "$a$" has a probability of 60% of being the next character, "$b$" has a probability of 30% of being the next character and so on.

With regards to Figure 2, the provided input text was "Hello World, ". The prediction word vector representation 260a may thus represent the word that is predicted by the backbone model 150 based on the input text 101 "Hello World, ". Accordingly, the vector of character probabilities 270a may represent the likelihood of each possible character to be the next character in a sequence of characters starting with "Hello World, ".

To achieve an iterative text generation, the vector representation of the most likely next character, in this case the vector representation of the character "$m$" 290a, may be concatenated to the prediction word vector representation 260a. The concatenation of the prediction word vector representation and the vector representation of the most likely next character may then be used as an updated input to the decoder 270. Based on the updated input information, the decoder 270 may predict a further vector of character probabilities 271a. In the example, the most likely subsequent character is the letter "$y$" 290b. The input to the decoder 270 is updated accordingly and the process continues in an iterative manner until the decoder 270 predicts the most likely character to be a special character (i.e., character with the highest probability of the final vector of character probabilities 270d). Note that a special character may signal the end of a word. If a special character is predicted, a word-level prediction 180, 380 which involves the backbone model and is described in more detail in Figure 3 may be triggered.

Figure 3 illustrates the inference process on a word-level 300 which may start as soon as a special character is predicted. As shown in Figure 3, the characters "$m$", "$y$", "_", 390 and the special character 390d may have been predicted to be the most likely next characters given the input text "Hello World, ". The special character 390d may indicate that the previously generated characters 390a-c form a word and that this word has now ended. The special character 390d may also function as a trigger of the word-level prediction 300. More specifically, when a special character is predicted, the special character 390d may be prepended to the sequence of characters of the previously generated character 390a-c. The sequence of characters of the previously generated character 390a-c including the prepended special character 390d may be used as an input to the embedding step 120 in which each character of the sequence is transformed into a character vector representation 120a. The subsequent encoding step 130 may return an encoded vector representation for each character 130a. However, only one encoded vector representation per word may be used for further processing and the other encoded vector representations are discarded. A linear mapping step 140 may be required to consolidate the remaining encoded word vector representations 140a. With regards to Figure 3, the linear mapping step 140 may consolidate the encoded word vector representation for the words "[W]Hello_", "[W] World,_" and the newly generated encoded word vector representation "[W]my_". This word-level input text may serve as the input text for the subsequent backbone phase which predicts the word vector representation of the subsequent word 150a. The result may be used as an input to the decoder 170, 270 and may start a character completion 200 as discussed in Figure 2.

Accordingly, the machine learning model may predict the most likely next character and may iteratively update the input of the decoder 170, 270 to predict a subsequent character 390a-c. Once the model predicts a special character 390d (i.e., character with the highest probability of the final vector of character probabilities 270d), which may indicate the end of a word, as the most likely next character, the word-level prediction 300 may be triggered and the input to the backbone model 150 may be updated to incorporate the previously generated characters 390a-c. Note that updating the input to the backbone model 150 may require embedding 120, encoding 130 and linearly transforming 140 the generated characters 390a-c. In this manner, the machine learning model may combine processing the input text on a character- and on a word-level.

An advantage of the machine learning model of the current disclosure may be a reduction in computational cost which results from a lower computational complexity. The reduction in computational complexity may be demonstrated by comparing the complexity of the current disclosure model ($C_{disclosure}$) with the complexity of a baseline model ($C_{baseline}$). The complexity of both models may heavily depend on the length of the sequence 140a that is passed through the backbone. In the case of the current disclosure model, the length of the sequence is that of the word vector representation and may be represented as $L_W$. Assuming that the base model uses a sub-word tokenizer, the length of the sequence is that of the sub-word vector representation times the number of sub-words present in the sequence and may be represented as $L_T$. Both models contain the same number of backbone parameters $P_{backbone}$. The baseline model may require additional embedding and output matrices with parameters $P_{head}$. The current disclosure model may further contain the parameters of the encoder and the decoder model $P_{char}$. The length of the sequence that is passed through the encoder and decoder may be larger than that that is passed through the backbone model and is denoted as $L + L_W$. Accordingly, the computational complexity of a baseline model may be described as $C_{baseline} = L_T(P_{backbone} + P_{head})$ and the computational complexity of the model of the current disclosure may be described as $C_{disclosure} = L_W P_{backbone} + 2(L + L_W)P_{char}$

Accordingly, the complexity of the current disclosure model may be lower than that of the baseline model if the following conditions hold true (a) $L_W < L_T$ and (b) $P_{char} \ll P_{backbone}$. The first condition may be concerned with the length of the input sequence to the backbone. More specifically, the length of the input sequence to the backbone of the current disclosure model may have to be smaller than the length of the input sequence to the backbone of the baseline model. Since the backbone of the current disclosure model processes the input on a word-level and the backbone of the baseline model processes the input on a sub-word level, it may be assumed that the length of the sequence is on average smaller in the current disclosure model. Accordingly, this condition may be achieved. The second condition may be concerned with the size of the respective models as measured in the number of parameters. More specifically, the encoder model and the decoder model may have to be much smaller than the backbone model. Given that the main computation takes place in the backbone model, this condition may also be achieved by the model of the current disclosure.

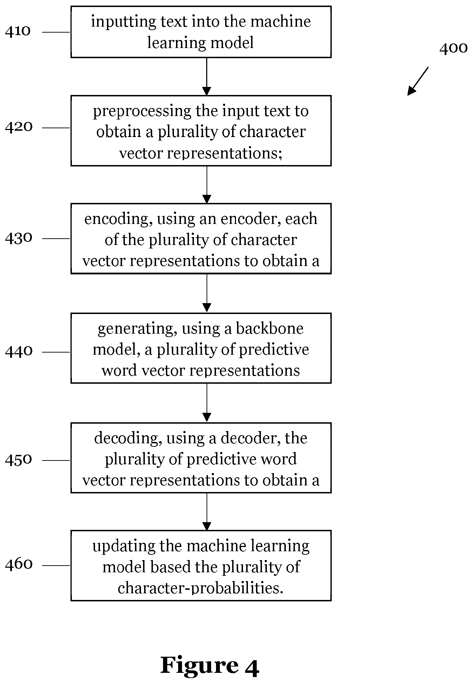

**Figure 4** is a flow diagram illustrated a computer-implemented method 400 for training a machine learning model for text generation according to an embodiment of the disclosure. A first step 410 comprises inputting text into the machine learning model. A second step 420 comprises preprocessing the input text to obtain a plurality of character vector representations. A third step 430 comprises encoding, using an encoder, each of the plurality of character vector representations to obtain a plurality of word vector representations. A fourth step 440 comprises generating, using a backbone model, a plurality of predictive word vector representations based on the plurality of word vector representations. A fifth step 450 comprises decoding, using a decoder, the plurality of predictive word vector representations to obtain a plurality of character-probabilities; and a sixth step comprises updating the machine learning model based the plurality of character-probabilities.

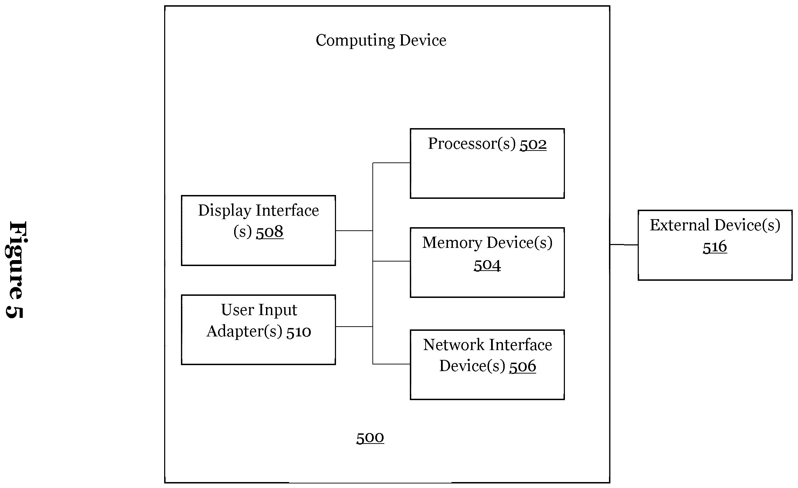

**Figure 5** is a block diagram of an example computing device 500 (which may also be referred to, for example, as a "computing device," "computer system," or "computing system") according to some embodiments.

In some embodiments, the computing device 500 includes one or more of the following: one or more processors 502 (which may be referred to as "hardware processors" or individually as a "hardware processor"); one or more memory devices 504; one or more network interface devices 506; one or more display interfaces 508; and one or more user input adapters 510. Additionally, in some embodiments, the computing device 700 is connected to or includes a display device, input devices, etc. These elements (e.g., the processors 502, memory devices 504, network interface devices 506, display interfaces 508, user input adapters 510) are hardware devices (for example, electronic circuits or combinations of circuits) that are configured to perform various different functions for the computing device 500. In some embodiments, these components of the computing device 500 may be collectively referred to as computing resources (e.g., resources that are used to carry out execution of instructions and include the processors (one or more processors 502), storage (one or more memory devices 504), and I/O (network interface devices 506, one or more display interfaces 508, and one or more user input adapters 510).

In some instances, the term processing resources may be used interchangeably with the term computing resources. In some embodiments, multiple instances of computing device 500 may arranged into a distributed computing system. Computing device 500 may be configured to communicate with one or more external devices 516. External devices 516 can be other instances of computing device or may be different (e.g., just storage devices, sensors, etc.). In some examples, computing device 500 includes multiple computing devices 500. As an example, a computing device 500 includes different architectures that may be used in cloud computing environments.

In some embodiments, each or any of the processors 502 is or includes, for example, a single- or multi-core processor, a microprocessor (e.g., which may be referred to as a central processing unit or CPU), a digital signal processor (DSP), a microprocessor in association with a DSP core, an Application Specific Integrated Circuit (ASIC), a Field Programmable Gate Array (FPGA) circuit, or a system-on-a-chip (SOC) (e.g., an integrated circuit that includes a CPU and other hardware components such as memory, networking interfaces, and the like). And/or, in some embodiments, each or any of the processors 502 uses an instruction set architecture such as x86 or Advanced RISC Machine (ARM).

In some embodiments, each or any of the memory devices 504 is or includes a random access memory (RAM) (such as a Dynamic RAM (DRAM) or Static RAM (SRAM)), a flash memory (based on, e.g., NAND or NOR technology), a hard disk, a magneto-optical medium, an optical medium, cache memory, a register (e.g., that holds instructions), or other type of device that performs the volatile or non-volatile storage of data and/or instructions (e.g., software that is executed on or by processors 502). Memory devices 504 are examples of non- transitory computer-readable storage media.

In some embodiments, each or any of the network interface devices 506 includes one or more circuits (such as a baseband processor and/or a wired or wireless transceiver), and implements layer one, layer two, and/or higher layers for one or more wired communications technologies (such as Ethernet (IEEE 802.3)) and/or wireless communications technologies (such as Bluetooth, WiFi (IEEE 802.11), GSM, CDMA2000, UMTS, LTE, LTE-Advanced (LTE-A), LTE Pro, Fifth Generation New Radio (5G NR) and/or other short-range, mid-range, and/or long-range wireless communications technologies).

Terms and phrases used in this document, and variations thereof, unless otherwise expressly stated, should be construed as open-ended rather than limiting. As examples of the foregoing: "and/or" includes any and all combinations of one or more of the associated listed items (e.g., a and/or b means a, b, or a and b); the singular forms "a", "an", and "the" should be read as meaning "at least one," "one or more," or the like; the term "example", which may be used interchangeably with the term embodiment, is used to provide examples of the subject matter under discussion, not an exhaustive or limiting list thereof; the terms "comprise" and "include" (and other conjugations and other variations thereof) specify the presence of the associated listed elements but do not preclude the presence or addition of one or more other elements; and if an element is described as "optional," such description should not be understood to indicate that other elements, not so described, are required.

As used herein, the term "non-transitory computer-readable storage medium" includes a register, a cache memory, a ROM, a semiconductor memory device (such as D-RAM, S-RAM, or other RAM), a magnetic medium such as a flash memory, a hard disk, a magneto-optical medium, an optical medium such as a CD-ROM, a DVD, or Blu-Ray Disc, or other types of volatile or non-volatile storage devices for non-transitory electronic data storage. The term "non-transitory computer-readable storage medium" does not include a transitory, propagating electromagnetic signal. Computer programs described herein may be stored on a non-transitory computer-readable storage medium.

The claims are not intended to invoke means-plus-function construction/ interpretation unless they expressly use the phrase "means for" or "step for." Claim elements intended to be construed/interpreted as means-plus-function language, if any, will expressly manifest that intention by reciting the phrase "means for" or "step for"; the foregoing applies to claim elements in all types of claims (method claims, apparatus claims, or claims of other types) and, for the avoidance of doubt, also applies to claim elements that are nested within method claims. Consistent with the preceding sentence, no claim element (in any claim of any type) should be construed/interpreted using means plus function construction/interpretation unless the claim element is expressly recited using the phrase "means for" or "step for."

Although various embodiments have been shown and described in detail, the claims are not limited to any particular embodiment or example. None of the above description should be read as implying that any particular element, step, range, or function is essential. All structural and functional equivalents to the elements of the above-described embodiments that are known to those of ordinary skill in the art are expressly incorporated herein by reference and are intended to be encompassed. Moreover, it is not necessary for a device or method to address each and every problem sought to be solved by the present invention, for it to be encompassed by the invention. No embodiment, feature, element, component, or step in this document is intended to be dedicated to the public.

Embodiments of the present disclosure may be realized in any of various forms, e.g., in software. For example, in some embodiments, the present invention may be realized as a computer-implemented method, a computer-readable memory medium, or a computer system.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a computing device may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. In particular, with reference to the appended claims, features from dependent claims may be combined with those of the independent claims and features from respective independent claims may be combined in any appropriate manner and not merely in the specific combinations enumerated in the appended claims.

**List of reference signs**

| 100 | training process |
| 101 | input text |
| 110a, 310a | character sequences |
| 110 | word splitting |
| 120 | embedding step |
| 120a | character vector representation |
| 130 | encoder |
| 130a | encoded character vector representation |
| 140, 160 | linear mapping |
| 140a | word vector representation |
| 150 | backbone model |
| 150a | predictive word vector representation |
| 160a, 260a | predictive word vector representation |
| 160b | sequence of character vector representations of the actual next word |
| 170, 270 | decoder |
| 170a, 270a-c | character probability vector |
| 171a | actual next character |
| 180, 300, 380 | word-level prediction |
| 200 | character completion |
| 290a-c, 390a-c | generated characters |
| 390d | special character |
| 400 | method for training |
| 410 | inputting step |
| 420 | preprocessing step |
| 430 | encoding step |
| 440 | backbone prediction step |
| 450 | decoding step |
| 460 | updating step |
| 500 | computing device |
| 502 | processor(s) |
| 504 | memory device(s) |
| 506 | network interface device(s) |
| 508 | display interface(s) |
| 510 | user input adapter(s) |
| 516 | external device(s) |

**Claims**

1.  A computer-implemented method for training a machine learning model for text generation, the method comprising:

    inputting text into the machine learning model;
    preprocessing the input text to obtain a plurality of character vector representations;
    encoding, using an encoder, each of the plurality of character vector representations to obtain a plurality of word vector representations;
    generating, using a backbone model, a plurality of predictive word vector representations based on the plurality of word vector representations;
    decoding, using a decoder, the plurality of predictive word vector representations to obtain a plurality of character-probabilities; and
    updating the machine learning model based the plurality of character-probabilities.

2.  The method of the preceding claim, further comprising iteratively repeating the steps of inputting, preprocessing, encoding, generating, decoding, and updating.

3. The method of any one of the preceding claims, wherein preprocessing comprises splitting the input text into a plurality of character sequences, wherein each character sequence represents a word; and embedding each character in the plurality of character sequences to obtain the plurality of character vector representations.

4. The method of the preceding claim, wherein preprocessing comprises, prior to embedding, prepending a special character to each character sequence.

5. The method of any one of the preceding claims, wherein the encoder is a first natural language processing model, wherein preferably the architecture of the first natural language processing model is based on a transformer model of the decoder-only variant, most preferably wherein the attention mechanism of the transformer is bidirectional.

6. The method of any one of the preceding claims, wherein the backbone model is a second natural language processing model, wherein preferably the architecture of the second natural language processing model is based on a transformer model of the decoder-only variant, most preferably wherein the attention mechanism of the transformer is causal.

7. The method of any one of the preceding claims, the method comprising, prior to the decoding step, concatenating each of the plurality of predictive word vector representations with the corresponding character vector representations.

8. The method of any one of the preceding claims, wherein the decoder is a third natural language processing model, wherein preferably the architecture of the third natural language processing model is based on a transformer model of the decoder-only variant, most preferably wherein the attention mechanism of the transformer is causal.

9. The method of any one of the preceding claims, wherein updating the machine learning model comprises updating one or more of the adjustable parameters of one or more of: an embedding matrix that is used during the preprocessing step, the encoder, the backbone model and/or the decoder.

10. A computer-implemented method for generating text using the machine learning model trained according to any one of the preceding claims, the method comprising:

inputting text into the trained machine learning model;
generating text based on the input text using the trained machine learning model.

11. The method of the preceding claim, wherein generating text comprises:

generating a character based on the plurality of character probabilities; and
updating the input of the decoder based on the generated character or updating the input of the backbone model based on the one or more generated characters; and
iteratively repeating the generating and the updating.

12. The method of the preceding claim, wherein updating the input of the decoder comprises:

determining that the generated character is not a special character; and
updating the input to the decoder based on the character vector representation of the generated character; and
decoding the updated input to obtain a plurality of character probabilities.

13. The method of claim 11, wherein updating the input of the backbone model comprises:

determining that the generated character is a special character;
prepending the special character to one or more generated characters to obtain a prediction character sequence;
embedding each character of the prediction character sequence to obtain a plurality of prediction character vector representations;
encoding, using the encoder, the prediction character vector representations to obtain a prediction word vector representation;
updating the input to the backbone model based the prediction word vector representation;
generating a predictive word vector representation based on the updated input;
decoding the predictive word vector representation to obtain a plurality of character probabilities.

14. A device or system comprising means for carrying out the method according to any one of claims 1 to 13.

15. A computer program comprising instructions which, when the program is executed by a computer, cause the computer to carry out the method of any one of claims 1 to 13.

**Figure 1**

**Figure 2**

Figure 3

410 — inputting text into the machine learning model

420 — preprocessing the input text to obtain a plurality of character vector representations;

430 — encoding, using an encoder, each of the plurality of character vector representations to obtain a

440 — generating, using a backbone model, a plurality of predictive word vector representations

450 — decoding, using a decoder, the plurality of predictive word vector representations to obtain a

460 — updating the machine learning model based the plurality of character-probabilities.

400

**Figure 4**

**Figure 5**

Computing Device

External Device(s) 516

Processor(s) 502

Memory Device(s) 504

Network Interface Device(s) 506

Display Interface (s) 508

User Input Adapter(s) 510

500

Europäisches
Patentamt

European
Patent Office

Office européen
des brevets

# EUROPEAN SEARCH REPORT

**Application Number**

**EP 24 20 3992**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHO TAKASE ET AL: "Character n-gram Embeddings to Improve RNN Language Models", ARXIV.ORG, CORNELL UNIVERSITY LIBRARY, 201 OLIN LIBRARY CORNELL UNIVERSITY ITHACA, NY 14853, 13 June 2019 (2019-06-13), XP081376830, * sections 1 and 3.1 * | 1-15 | INV. G06F40/30 G06F40/56 G06F40/284 |
| A | US 11 790 227 B1 (RIORDAN BRIAN W [US] ET AL) 17 October 2023 (2023-10-17) * the whole document * | 1-15 | |
| A | LI SUN ET AL: "From Characters to Words: Hierarchical Pre-trained Language Model for Open-vocabulary Language Understanding", ARXIV.ORG, CORNELL UNIVERSITY LIBRARY, 201 OLIN LIBRARY CORNELL UNIVERSITY ITHACA, NY 14853, 23 May 2023 (2023-05-23), XP091517551, * the whole document * | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 6 February 2025 | Abram, Robert |

EPO FORM 1503 03.82 (P04C01)

## ANNEX TO THE EUROPEAN SEARCH REPORT
## ON EUROPEAN PATENT APPLICATION NO.

EP 24 20 3992

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2025

| Patent document cited in search report | Publication date | Patent family member(s) | Publication date |
|---|---|---|---|
| US 11790227 B1 | 17-10-2023 | NONE | |

For more details about this annex : see Official Journal of the European Patent Office, No. 12/82